# EUROPEAN PATENT APPLICATION

(11) **EP 2 482 241 A1**
(43) Date of publication of application: **01.08.2012**
(21) Application number: 12153296.4
(22) Date of filing: 31.01.2012
(51) Int. Cl.: G06Q 10/08

(54) **System and method for collecting, recycling, and tracking products such as golf balls**

(30) Priority: 31.01.2011 US 201113018007
(71) Applicant: Nike International Ltd., Beaverton, OR 97005-6453 (US)
(72) Inventor: Ishii, Hideyuki, Beaverton, Oregon 97005 (US); Alan, Mark, Beaverton, Oregon 97005 (US); Cheng, Chia-Chyi, Beaverton, Oregon 97005 (US); Fitchett, Derek, Beaverton, Oregon 97005 (US); Ichikawa, Yasushi, Beaverton, Oregon 97005 (US); Leech, Nicholas, Beaverton, Oregon 97005 (US); Tutmark, Bradley, Beaverton, Oregon 97005 (US); Ko, Chin-Shun, Beaverton, Oregon 97005 (US); Moon, Jung Gyu, Beaverton, Oregon 97005 (US)
(74) Representative: Grünecker, Kinkeldey, Stockmair & Schwanhäusser

(57) **Abstract**

A system and method for incentivizing recycling of collected products by providing both an incentive award and information about the post-recycling stream designation of the collected products to a user. The collected products are assigned a trace element which is machine readable data input, with scanners or detectors disposed along the recycling stream. Once a decision is made regarding the recycle designation for a collected product, that information is provided to the user. A computer program that stores and calculates the award could be used to calculate analogous or ancillary calculations regarding post-recycling designations to enable comparisons with other users and online competition.

## Description

### BACKGROUND OF THE INVENTION

### 1. Field of the Invention

The present invention relates to a system and method for collecting, recycling products such as golf balls, and providing a user with both a recycle incentive award and information about the product's intended reprocessed use via a network.

### 2. Description of Related Art

The rise of ecological awareness has prompted an array of recycling and reuse ideas for all types of consumer products. In the athletic footwear and equipment industries, much effort has been expended to collect and recycle scrap materials produced during manufacture as well as collecting used products for materials. One well known program is commonly called the Nike "Grind" program in which used footwear is collected, disassembled, and the components ground to procure materials for use in new products. For example, used footwear components have been ground and remade into surfaces such as basketball courts, running tracks, and other play surfaces. A variation of this process is described in commonly assigned U.S. Patent No. 5,346,934, the disclosure of which is hereby incorporated by reference.

In the athletic equipment industry, one product that has seen some recycling efforts is the golf ball. Among a variety of reasons, a few stand out as the primary reasons for recycling efforts for golf balls: (i) the shear volume 1 of used products that end up in landfills or possibly polluting the environment due to the chemicals used in coatings and other layers of golf balls; and (ii) the chemistry and construction of golf balls renders them more difficult than most consumer products to break down into the component materials in a usable fashion. These difficulties have inspired the industry to approach the recycling and reuse of golf balls from many different angles. While the prior art contains many examples of recycling programs that provide an incentive to the user to return used or spent products for recycling and refurbishing, that is where the information stops. That is, the user is generally ignorant of the product's fate after returning a product for recycling. There has not been a system in place to inform the user of what will happen or has happened to the products that they took efforts to recycle.

One method described in the art by U.S. Patent Application Publication No. 2010/0056305, the contents of which are hereby incorporated by reference, involves recycling golf balls by providing incentives for golfers to return golf balls for recycling. Specifically, the method involves the forward distribution of new golf balls from golf ball manufacturers to consumers by selling the new golf balls directly to golfers through known direct distribution channels such as direct mail orders, catalog orders, internet orders or phone orders. Alternatively, golf ball manufacturers may sell or convey golf balls to golf facilities or retail stores, online or brick and mortar. After the golf balls are spent, reverse distribution channels are provided to golfers and golf facilities to return the used balls to the original manufacturers. The publication states that this ensures that the recycled cores match the covers of the original brand of golf balls. To accomplish this, the returned balls are sorted by original manufacturer, manufacturer brand and quality. The sorting can occur at the golf facility that collected the balls or at a central hub for recycling management. The reverse distribution channels also include other means such as directly returning the balls to the original manufacturer; retail collection stations; kiosks, and the like. The manufacturers that receive the used balls issue a recycling award to the golfer and/or golf facility that was the source of the returned balls. This type of incentivizing the collection and return of used products by issuing a reward has been practiced for a long time. A ready example is the spent ink or toner cartridges from printers and copiers. Manufacturers have routinely issued coupons and the like for the return of the used cartridges to the original manufacturer. Financial incentives for the return of used products have been used by many industries. A ready example of these incentives is the money returned to the buyer for return of glass bottles to retail stores.

Along with tracking, even more motivating may be the use of social networking sites or online competition sites to enable comparing recycling awards, points or volumes with other users. Most recycling programs in place do not provide a direct correlation of the used products collected and the impact to the environment.

The athletic equipment industry continues to move toward green practices, and the challenge of recycling programs is to motivate consumers and users to actually return the used products. Encouraging the return of used products can take many forms, and one that has not been exploited much to date is that of informing the consumer or user of the end result of their contribution to the recycling effort.

### SUMMARY OF THE INVENTION

With the availability of information exchange on the internet such as social networking sites and various avenues of online competition, recycling activity and results can be monitored, incentivized and tracked beyond the simple issuance of a reward upon return of used product. The reduction in cost and easy implementation of various tracking modes such as bar codes, RFIDs, and the like, make it possible to not only count returned product and issue a proportional award, but also to track the used product more deeply into the recycling process.

A system and method for collecting used products includes using a trace element associated with the product or batch of products to generate data regarding the progress of the used product through the recycling process. The trace element is a unique identifier that may be applied during manufacture or applied to collected products. A scanning or reading means is used to track the trace element of used products through various stages of the recycling process. Via a network such as the internet and a host server, a user would be informed of the ultimate intended designation for the used product or materials that are procured therefrom.

A method incentivizing the recycling of collected products also includes the calculation of an incentive award associated with the collected products by piece, volume, condition, type, etc. This calculation is performed by a computer with the trace element data that would include quantity information, and communicating the award to a user, either in person or via a network. The method also includes informing the user of the intended post-recycling designation for the collected products via a network by employing machine detection of the trace element as the collected products move through the recycling stream. The data regarding the post-recycling designation may also be used by a computer program to compare with the data of another user to enable competition in recycling. This could be enabled by use of analogous or ancillary calculations based on the amount of product that is returned to the recycling stream. Sharing the post-recycling designation information via a network, and enabling competition could motivate stronger participation in recycling.

Other systems, methods, features and advantages of the invention will be, or will become, apparent to one of ordinary skill in the art upon examination of the following figures and detailed description. It is intended that all such additional systems, methods, features and advantages be included within this description and this summary, be within the scope of the invention, and be protected by the following claims.

### BRIEF DESCRIPTION OF THE DRAWINGS

The invention can be better understood with reference to the following drawings and description. The components in the figures are not necessarily to scale, emphasis instead being placed upon illustrating the principles of the invention. Moreover, in the figures, like reference numerals designate corresponding parts throughout the different views.

FIG. 1 is a diagram illustrating an overview of a recycling incentive and tracking method for products such as golf balls.

FIG. 2 is a diagram illustrating the movement of the products through a recycling incentive and tracking process.

FIG. 3 is a schematic diagram of various collection points.

FIG. 4 is a detailed diagram of the collection step including input of a trace element on products.

FIG. 5 is a detailed diagram of the trace element input step and tracking through the program.

FIG. 6 is a schematic diagram of information exchange between a user and a recycling incentive and tracing server.

FIG. 7 is a schematic representation of the components of a recycling incentive and tracking system.

### DETAILED DESCRIPTION OF THE PREFERRED EMBODIMENTS

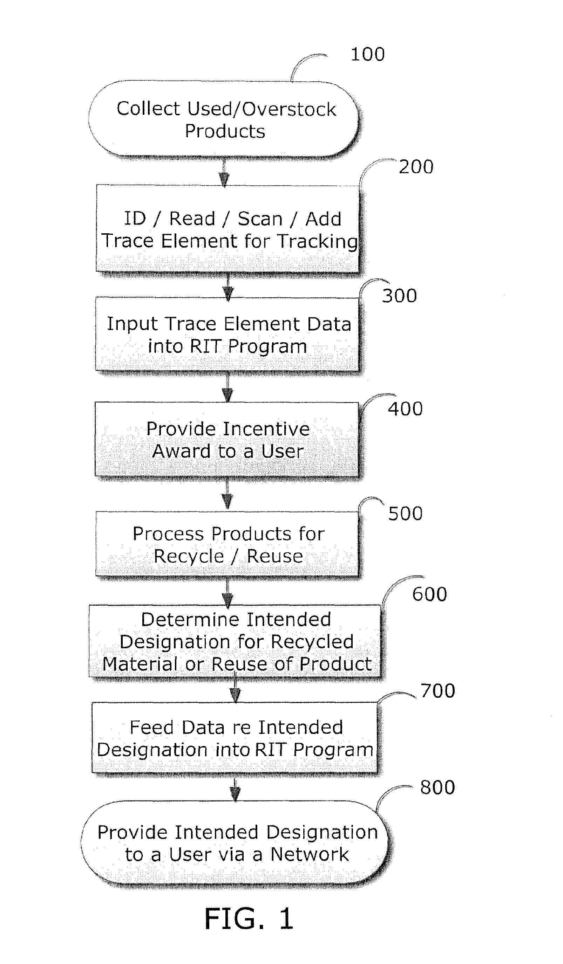

An overview of a method and system for incentivizing the collection and recycling of products is shown in FIG. 1. The collected products may be of any type that could be collected and recycled. The terms recycle and recycling are used throughout this specification to refer to any number of reprocessing concepts for collected products including, but not limited to, wholesale recycling of products such as with PET bottles; the disassembly of products into component parts and recycling or reusing the parts or materials; and the wholesale reuse of products such as with tires repurposed for playgrounds. The term may also encompass other required steps such as sorting and cleaning the collected products. The collected products may be collected from users such as individuals, households, organizations or other entities; or obtained from manufacturers who have seconds or overstock products to dispose. The term "collected product" is intended to encompass all used or excess products that are put into a recycling stream.

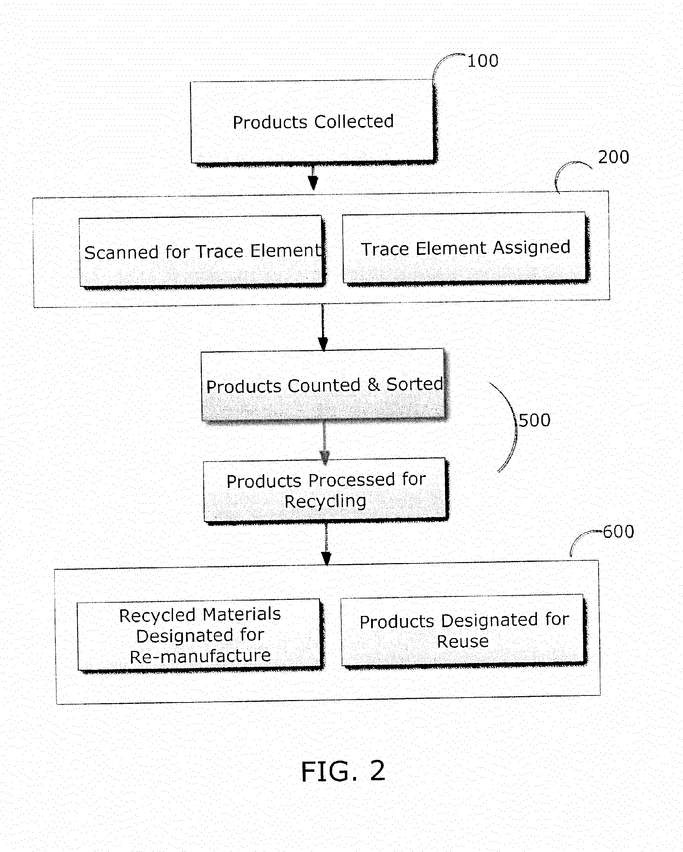

FIG. 2 provides an overview of the movement of a collected product through a recycling stream that may embody the present invention. More detail about each step is described below. For purposes of FIG. 2, a simple explanation of the movement of product is provided here. Once the products are collected at step 100, the present invention avails itself of a unique identifier associated with collected products in order to track the products through the recycling stream. It is contemplated that products may be outfitted with a unique identifier at manufacture, or that collected products may be retrofitted with a unique identifier after the collection step. The unique identifier is referred to throughout this specification as a trace element, and more detail about the trace element is described below. The scanning or reading of a trace element or the retrofit of a trace element on the collected products is handled in step 200. The collected products are then processed for recycling in step 500. This step encompasses many possible actions such as counting and sorting; separating by condition of product; separating by original manufacturer, etc. Each of the sorting factors can be used to direct the collected products into designations such as routing for disassembly and recycling of materials and components for re-manufacture of products that are like or unlike the original collected products; or routing for re-use designations. The collected products are then routed to their designated recycling ends in step 600.

With respect to the example of golf balls, the recycling process, step 500, may involve many separate steps. For example, the golf balls may have the covered stripped or removed from them to obtain separate cover and core material, and such removal could be carried out using known methods or those disclosed in commonly owned application number (_ /ttorney Docket 72-1161), and application number (_ / Attorney Docket 72-1167), the disclosures of which are hereby incorporated by reference. The core material could be melted and repurposed or reused by known methods, or those disclosed in commonly owned application number (_ / Attorney Docket 72-1169), the disclosure of which is also hereby incorporated by reference. The collected golf balls may also be recovered or refurbished by known methods or by those disclosed in commonly owned application number (_ / Attorney Docket 72-1159), the disclosure of which is also hereby incorporated by reference.

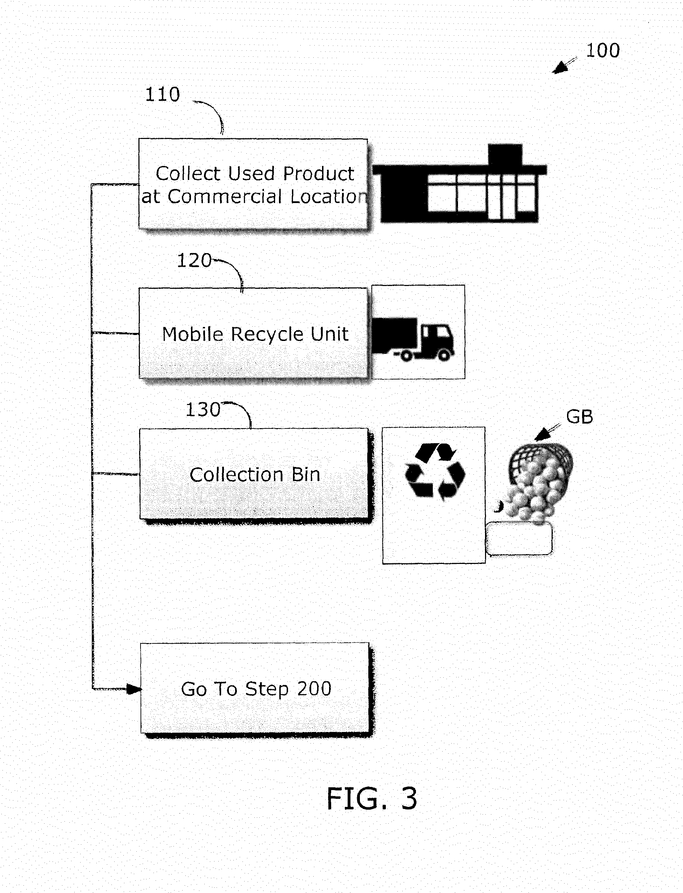

The simple diagram of FIG. 2 showing what happens to collected products helps give understanding to the entirety of the recycling and tracking method of the present invention as shown in FIG. 1. The first step in the method is the collection of used or overstock products. Various ways of collecting the products, step 100, are shown schematically in FIG. 3. The collecting methods run the gamut of what many municipal recycling programs already have in place: the products can be collected at commercial locations 110 in association with designated containers or in collection events. For the case of golf balls, some examples are golf clubs, pro shops, retail stores, driving ranges, and the like where golfers would be examining and discarding their used golf balls and/or purchasing or acquiring new ones. The products can also be collected by a mobile recycling unit 120. As currently contemplated, the mobile recycling unit could have other components of the system onboard making it possible for communities, businesses, charities and other organizations to employ such mobile units in collection, fund-raising or golf outing events. Products can also be collected using recycling collection bins 130 to collect golf balls GB in places where golfers would easily have access to them. One or a combination of the collection methods could be used to perform the collection step 100 of the present invention.

After the products are collected, the present invention provides for a way to track the products through the recycling stream by means of a unique identifier associated with the products. In this identifier step 200, a unique identifier is scanned or read from the collected products or assigned to them depending on whether the products were outfitted with one at manufacture, or need to be retrofitted with one during or after collection. In this specification this is referred to as a trace element and may comprise any appropriate identifying means such as an optical machine-readable representation of data, one example of which is a barcode; an RFID chip or other like means. The trace element may have been part of the original manufacture of the product such as if the method of the present invention were employed by an original equipment manufacturer (OEM) that then embarks on a recycling program for its and competitors' products. Such an OEM may outfit its new products with a suitable trace element for tracking in the stream of commerce or later in a post-consumer stream of recycling. The method of the present invention is contemplated to be used with all types of collected products, so it provides for the application of a trace element to products were not originally manufactured with one. This is the retrofit application of an optical symbology or data representation, or an RFID chip or the like to collected products. It is contemplated that each collected product may be retrofit with a trace element, or that collected products could be batched in some suitable way and the trace element applied to the batch. Any type of trace element application, step 200, would be within the scope of the invention.

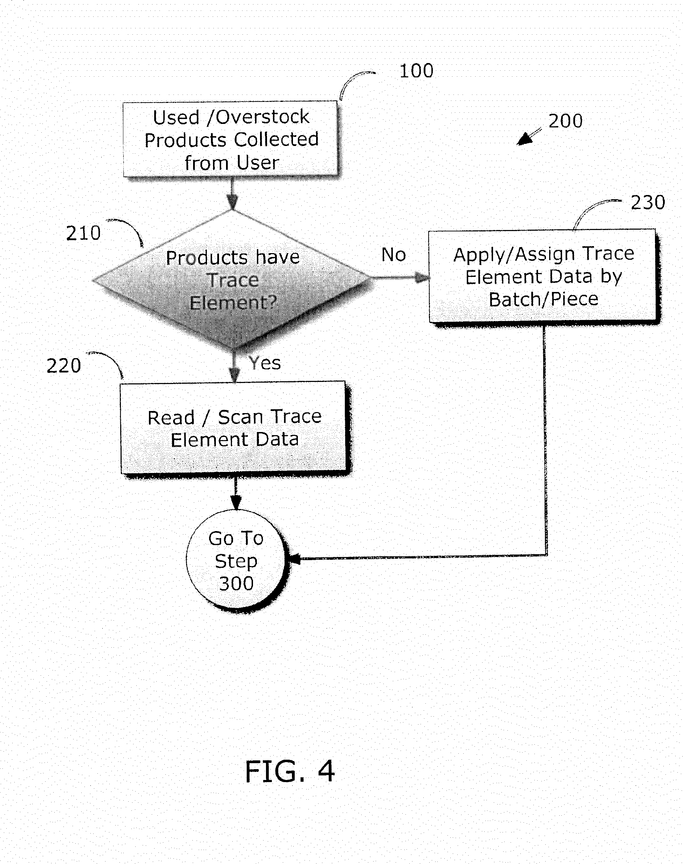

A diagram illustrating the logic flow of the trace element application step 200 is shown in FIG. 4 in which the first decision 210 is to determine whether the collected products already have a trace element or not. Those that already have a trace element, would be scanned, step 220, by means of an optical scanner in the case of optical symbology, or an RFID reader in the case of an RFID chip, or the like, to collect the trace element data. Those collected products that enter the recycling stream without a meaningful trace element are then retrofitted with a suitable one in step 230. As described above, the products may be retrofit by piece or batch, and the full range of trace elements are available.

It is also contemplated that certain types of products may utilize multiple trace elements, because distinct parts of a product may require different post-collection procession and/or may be used in different downstream products. For example, many golf balls are made of an ionomer cover and a rubber core. To recycle such a golf ball, the ionomer cover is separated from the rubber core, as the ionomer cover may be a thermoplastic, reusable material while the rubber core is a thermoset material which is typically re-used as is or ground as filler material. Also, even if the cover is made of a thermoset material, the recovered thermoset cover material may be used in different types of end products than recovered rubber cores. Therefore, a first trace element may be provided on the cover while another trace element may be provided on or with the core. Other types of collected products, for example footwear where the upper and the sole are disassembled prior to further processing the components into different downstream products, may also utilize multiple trace elements on a single particular collected product. These trace elements, which may be unique or batch, may be provided during original manufacture or upon recycling disassembly.

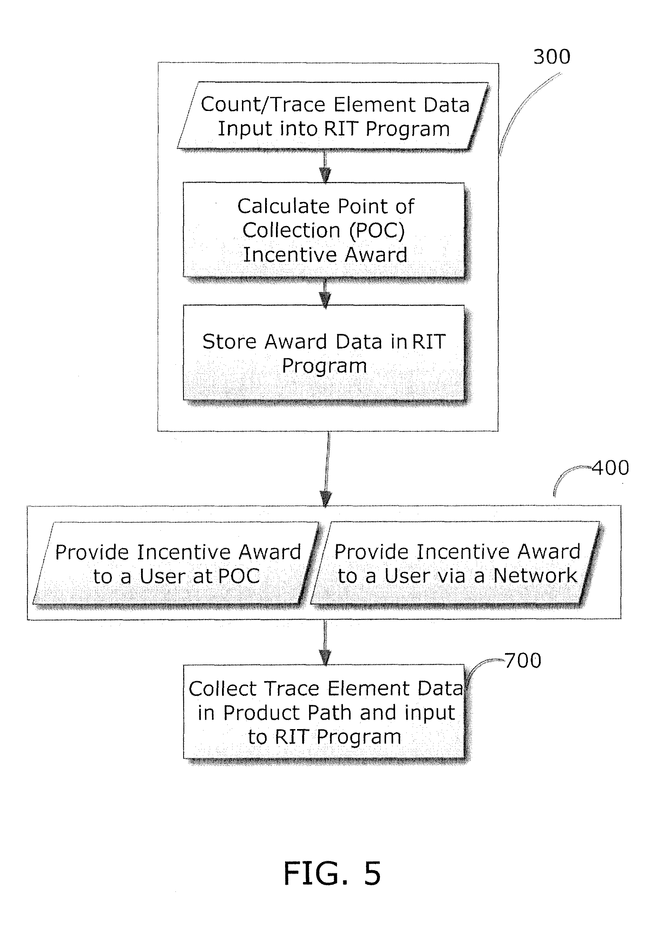

As seen in FIG. 1, the collected products which have the trace elements applied thereon would be moved through a scanner or other suitable device to collect the trace element data. This trace element data is then input into a Recycling Incentive and Tracking Program (RIT), step 300, for data storage and further processing. FIG. 5 shows the trace element input step 300 and the incentive award step 400 in some more detail as would be processed by the RIT. The input step 300 involves the input of the trace element data into the RIT in order to count or otherwise quantify by volume, weight, etc. the amount of collected products. The RIT then calculates a point of collection (POC) incentive award based on the quantity of collected products. Any suitable calculation in combination of any suitable correlating incentive award could be used. For example, the incentive award may base a one-to-one point value that correlates to the number of pieces of collected product returned by a user. Namely, if a golfer returns one dozen (12) golf balls to a recycling collection event, the POC incentive award may be twelve (12) points in an award program, or twelve (12) credits toward a new product purchase or the like. Possibilities for the calculation and correlation of collected products to a recycling incentive award are varied, and limited only by what a recycling program host or OEM would be willing to do. There are marketing applications to this type of recycling program which could involve product tie-ins and collection drives.

FIG. 5 shows that depending on the user interface, step 400, could be experienced live and in person, or through a computer network. For example, if a RIT program were fully installed and promoted in a commercial space, a user may bring products for recycling to a point of collection (POC), and be provided with an incentive award at the POC. Alternatively, if a different means is employed to collect the products that are remote from the host of the RIT program, the incentive award can be provided to a user via a network such as via an internet interface. The incentive award may comprise a product, a coupon, a rebate, a credit on a prepaid debit card or gift card, a point value as part of an award program, a point value as part of an established award program such as those run by credit card companies, a point value as part of a promotional product program, a monetary award or a combination of any of these. It is also contemplated that the host of an RIT program could assign different incentive values to collected products. An example would be of assigning a higher incentive value for collected products manufactured by certain OEM.

The present invention combines an incentive award with the ability to track the collected products further into the recycling stream, step 700, with a goal of informing a user of the ultimate designation for the collected products. This is accomplished by using readers or detectors of the trace element in various stages of the recycling stream. After the collected products are counted and sorted, a determination is made as to how the collected products will be recycled. A reader or detector for the trace element could be disposed where the collected products are routed to their designated path, and the data input into the RIT program. Depending on the complexity of the recycling stream and the amount of data that is desired to be collected, it is contemplated that a user may be able to track the collected products through the entire stream. It is also possible that a handheld computer could be used as part of the tracking process such as by equipping a smart phone camera with recognition software to count collected products and upload the data to the RIT server. Ultimately, a user would be provided with the information about the final designation of the collected products. For example, in a PET container example, a user that returned PET containers to a collection point will be able to find out that the PET containers were routed to a fleece factory to be made into fleece blankets. In another example of golf balls, a user that returned golf balls to a collection point will be able to find out that the golf balls were routed for disassembly and reprocessing of materials to an equipment factory. In another example of athletic footwear, a user that returned a used pair of shoes will be able to find out that the shoes were routed for disassembly and reprocessing of materials and that the materials are slated to be made into an outdoor basketball court.

In addition to the ultimate designation, it is possible that the designation information could be associated with a point system or other type of competitive program to enable competition among users of the recycling stream. It is also contemplated that the data collected by the RIT program could be used to calculate analogous or ancillary comparisons which could then be used for competitive or comparison purposes. One example would be that Company A returned a quantity of PET containers which were routed for recycling into fleece fabric, and that the quantity is equivalent to a mile of fabric, fifty yards wide. Another example would be that Group B returned a quantity of golf balls which were routed for recycling, and that the quantity saved x volume of landfill space. Yet another example of an ancillary calculation would be that Organization C returned a quantity of products which were routed for re-use, and that the quantity decreased the carbon load by x amount. By using any of the numerous available calculators for carbon load, and the like, an aspect of online competition for recycling could be enhanced by competing with such analogous or ancillary calculations that quantify the impact of the recycling.

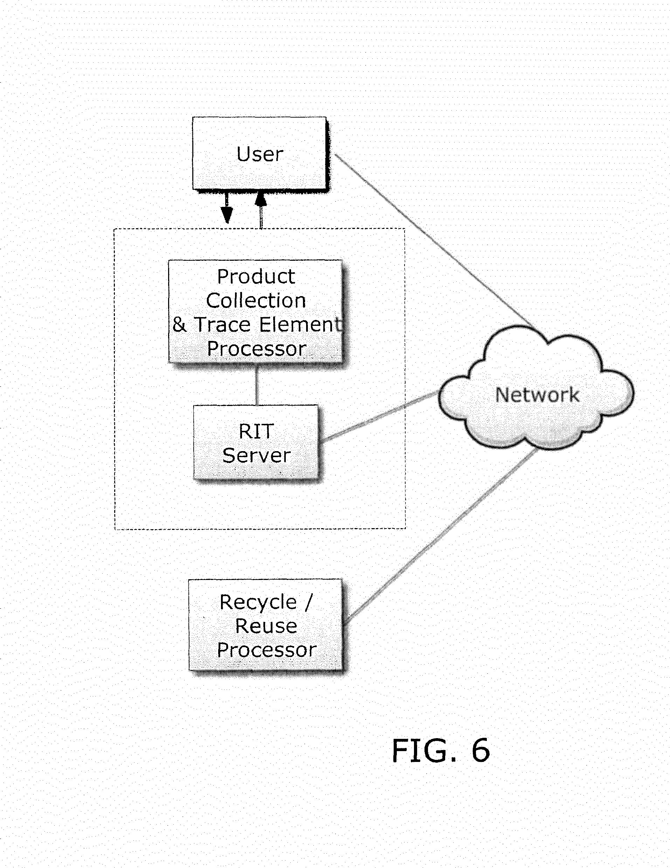

FIG. 6 schematically illustrates a user's interface with the RIT program. As used in this specification, a "user" refers to a single individual, but could also refer to a group, a team, an organization, or other type of collective. One way that a user could interface with the RIT program is directly with the host of the RIT program, such as at a recycling event or commercial location. This could entail a collection point in which products are brought for recycling and the trace element data and quantity data are loaded to the RIT server that houses the RIT program. In this scenario, the incentive award could be provided to the user on the spot, or at the point of collection (POC). The RIT server may be connected to a network, such as the internet, and all information could be exchanged between the user and the RIT host via the network using online sites. Although it is possible that the RIT host is also a recycle processor, it is also possible that the RIT host would route the collected products to another party for actual recycling. FIG. 6 shows this possibility, and the communications between the recycler and the RIT host and the user all possibly occurring via a network such as the internet. For purposes of this disclosure, a server includes a computer with one or more processors and a computer readable storage medium such as a hard-drive, removable drive or other memory. A computer program such as the RIT program having executable instructions may be stored on the computer readable storage medium. It is also contemplated that a computer program such as an RIT program could be written by a technologist given the concepts of the present invention.

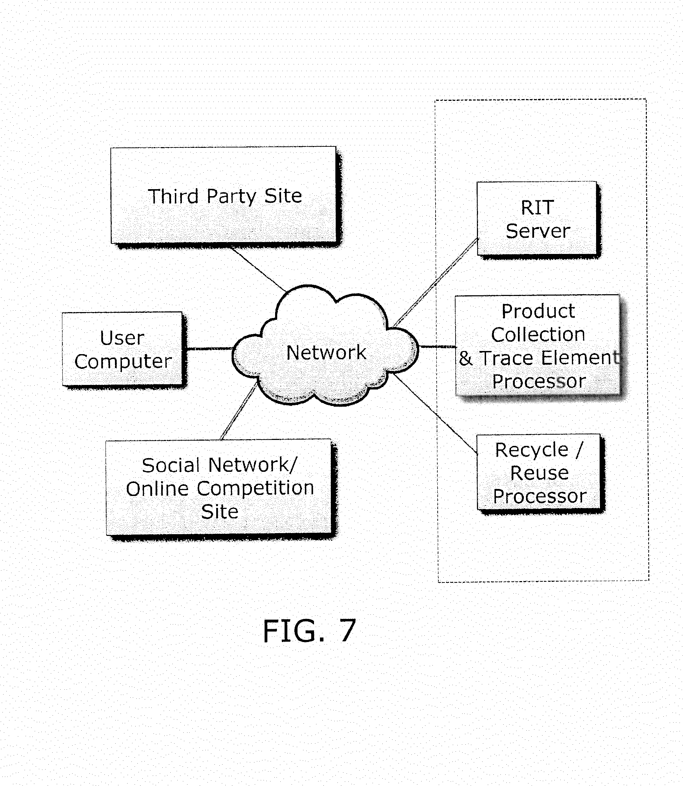

Aside from the immediacy of the incentive award that is generally provided to a user on the spot or shortly thereafter, it is contemplated that being able to track the collected products further into the recycling stream and being informed of their ultimate destination will motivate recycling efforts. This is especially true when the data regarding the collected products is used for competitive purposes between two or more users. This could occur via a host site by the entity that operates the RIT program; or could also occur via a third party website such as an online competition site. It is also contemplated that the recycling data could be used for a competition or event hosted on a social network site such as Facebook or Twitter. The possibility of having users, such as individuals, or organizations or teams, competing for incentive awards and tracking data such as the analogous or ancillary calculations described above, may increase participation in recycling efforts. FIG. 7 is a schematic diagram of the components that could be employed in a recycling incentive and tracking method. As indicated by the dashed box, a single host or entity may operate a RIT server, a product collection and trace element processor and the recycle processor. It is also contemplated that all of these functions could be carried out by separate entities that communicate the data to the RIT server via a network. It can also be seen in FIG. 7 that a user can participate in incentive awards and competitions as well as simply share information about recycling via a network employing social networking sites or other third party sites. This makes product tie-ins and other promotional efforts easily associate with recycling efforts. The permutations are many. The use of both an incentive award and the use of downstream tracking data to enable online comparisons, calculations and competitions may be a potentially powerful aspect of the invention n motivating more recycling participation.

Further embodiments of the invention are as follows:
1. A method of tracking collected products through a recycling process with a computer, said method comprising the steps of:
   assigning a trace element to the collected products to uniquely identify same and storing the trace element data in the computer;
   inputting the trace element data into a computer program;
   calculating with the computer program an incentive award associated with the collected products;
   communicating the award to a user;
   receiving intended post-recycling designation data for the collected products into the computer program; and
   communicating the post-recycling designation to a user.
2. The method of embodiment 1, further comprising a step of processing the collected products for recycling.
3. The method of embodiment 2, further comprising steps of determining intended post-recycling designation for the collected products and communicating data associated with the post-recycling designation to the computer program.
4. The method of embodiment 1, wherein said step of communicating the award to a user is done via a network.
5. The method of embodiment 1, wherein said step of communicating the post-recycling designation to a user is done via a network.
6. The method of embodiment 1, further comprising a step of storing the incentive award calculation and the intended post-recycling designation data of a user.
7. The method of embodiment 6, further comprising a step of comparing the incentive award calculation or the intended post-recycling designation data of a first user to that of a second user to enable a competition among users.
8. The method of embodiment 7, wherein the competition among users is conducted through an online interface.
9. The method of embodiment 6, further comprising the step of graphically representing the incentive award calculation or the intended post-recycling designation data of a user.
10. The method of embodiment 6, further comprising the step of producing an analogous calculation using the post-recycling designation data to provide examples of use of the collected products.
11. The method of embodiment 1, wherein the incentive award is selected from the group consisting of products, coupons, rebates, gift points, reward points, gift cards, credits, monetary awards, or combinations thereof.
12. The method of embodiment 11, further comprising a step of storing the incentive award calculation and incentive award for a user.
13. The method of claim 12, further comprising a step of comparing the incentive award calculation of a first user to that of a second user to enable a competition among users.
14. The method of claim 13, wherein the competition among users is conducted through an online interface.
15. The method of embodiment 11, wherein said step of communicating the award to a user is done via a network..
16. The method of embodiment 1, wherein the trace element is selected from the group consisting of an optical machine-readable representation of data, an RFID chip, or other machine translatable device applied to the collected products or batches of collected products.
17. The method of embodiment 1, wherein the step of receiving intended post-recycling designation data for the collected products is achieved via machine detection of the trace element.
18. The method of embodiment 1, wherein the step of receiving intended post-recycling designation data for the collected products is achieved via input from a recycling processor location.
19. The method of embodiment 1, wherein a first component of a particular collected product has a first intended post-recycling designation and a second component of the particular collected product has a second intended post-recycling designation;
   wherein the step of assigning a trace element to the collected products to uniquely identify same and storing the trace element data in the computer includes assigning a first trace element to the first component of the particular collected product and a second trace element to the second component of the particular collected product and storing both the first trace element data and the second element data in the computer;
   wherein the step of receiving intended post-recycling designation data includes receiving the first intended post-recycling designation for the first component of the particular collected product and the second intended post-recycling designation data for the second component of the particular collected product into the computer program; and wherein the step of communicating intended post-recycling designation to a user includes communicating both the first intended post-recycling designation and the second intended post-recycling designation to a user.
20. A method for incentivizing recycling of collected products comprising the steps of:
   assigning a trace element to the collected products to uniquely identify same and storing the trace element data in the computer;
   inputting the trace element data into a computer program;
   calculating with the computer program an incentive award associated with the collected products;
   communicating the award to a user;
   receiving intended post-recycling designation data for the collected products into the computer program via machine detection of the trace element through a recycling processing location;
   storing the incentive award calculation and the intended post-recycling designation data of a user; and
   comparing the incentive award calculation or the intended post-recycling designation data of a first user to that of a second user to enable a competition among users.

While various embodiments of the invention have been described, the description is intended to be exemplary, rather than limiting and it will be apparent to those of ordinary skill in the art that many more embodiments and implementations are possible that are within the scope of the invention. Accordingly, the invention is not to be restricted except in light of the attached claims and their equivalents. Also, various modifications and changes may be made within the scope of the attached claims.

## Claims

1. A method of tracking collected products through a recycling process with a computer, said method comprising the steps of:
assigning a trace element to the collected products to uniquely identify same and storing the trace element data in the computer;
inputting the trace element data into a computer program;
calculating with the computer program an incentive award associated with the collected products;
communicating the award to a user;
receiving intended post-recycling designation data for the collected products into the computer program; and
communicating the post-recycling designation to a user.

2. The method of claim 1, further comprising a step of processing the collected products for recycling.

3. The method of claim 2, further comprising steps of determining intended post-recycling designation for the collected products and communicating data associated with the post-recycling designation to the computer program.

4. The method of one of claims 1 to 3, wherein said step of communicating the award to a user is done and/or said step of communicating the post-recycling designation to a user is done via a network.

5. The method of one of claims 1 to 4, further comprising a step of storing the incentive award calculation and the intended post-recycling designation data of a user.

6. The method of claim 5, further comprising a step of comparing the incentive award calculation or the intended post-recycling designation data of a first user to that of a second user to enable a competition among users, in particular wherein the competition among users is conducted through an online interface.

7. The method of claim 5 or 6, further comprising the step of graphically representing the incentive award calculation or the intended post-recycling designation data of a user.

8. The method of claims 5, 6 or 7, further comprising the step of producing an analogous calculation using the post-recycling designation data to provide examples of use of the collected products.

9. The method of one of claims 1 to 8, wherein the incentive award is selected from the group consisting of products, coupons, rebates, gift points, reward points, gift cards, credits, monetary awards, or combinations thereof.

10. The method of claim 9, further comprising a step of storing the incentive award calculation and incentive award for a user, in particular comprising a step of comparing the incentive award calculation of a first user to that of a second user to enable a competition among users, and in particular wherein the competition among users is conducted through an online interface.

11. The method of one of claims 9 or 10, wherein said step of communicating the award to a user is done via a network.

12. The method of one of claims 1 to 11, wherein the trace element is selected from the group consisting of an optical machine-readable representation of data, an RFID chip, or other machine translatable device applied to the collected products or batches of collected products.

13. The method of one of claims 1 to 12, wherein the step of receiving intended post-recycling designation data for the collected products is achieved via machine detection of the trace element and/or wherein the step of receiving intended post-recycling designation data for the collected products is achieved via input from a recycling processor location.

14. The method of one of claims 1 to 13, wherein a first component of a particular collected product has a first intended post-recycling designation and a second component of the particular collected product has a second intended post-recycling designation;
wherein the step of assigning a trace element to the collected products to uniquely identify same and storing the trace element data in the computer includes assigning a first trace element to the first component of the particular collected product and a second trace element to the second component of the particular collected product and storing both the first trace element data and the second element data in the computer;
wherein the step of receiving intended post-recycling designation data includes receiving the first intended post-recycling designation for the first component of the particular collected product and the second intended post-recycling designation data for the second component of the particular collected product into the computer program; and
wherein the step of communicating intended post-recycling designation to a user includes communicating both the first intended post-recycling designation and the second intended post-recycling designation to a user.

15. A method of one of claims 1 to 14, comprising the steps of:
receiving intended post-recycling designation data for the collected products into the computer program via machine detection of the trace element through a recycling processing location;
storing the incentive award calculation and the intended post-recycling designation data of a user; and
comparing the incentive award calculation or the intended post-recycling designation data of a first user to that of a second user to enable a competition among users.
